# EUROPÄISCHE PATENTSCHRIFT

(11) **EP 1 004 487 B1**
(45) Veröffentlichungstag und Bekanntmachung des Hinweises auf die Patenterteilung: **08.06.2005**
(21) Anmeldenummer: 99122833.9
(22) Anmeldetag: 17.11.1999
(51) Int. Cl.: B60R 27/00, B60R 5/00, B60H 1/00

(54) **Vorrichtung für einen abschliessbaren Raum eines Fahrzeugs**
Device for a lockable space in a vehicle
Dispositif pour un espace verrouillable d'un véhicule

(30) Priorität: 25.11.1998 DE 19854381; 05.03.1999 DE 19909794
(43) Veröffentlichungstag der Anmeldung: 31.05.2000
(73) Patentinhaber: Bayerische Motoren Werke Aktiengesellschaft, 80809 München (DE)
(72) Erfinder: Stavermann, Jörg, 80331 München (DE); Luthe, Christoph, 80809 München (DE)

(56) Entgegenhaltungen:
- US-A- 3 844 606
- US-A- 4 658 597
- US-A- 5 054 686
- US-A- 5 404 128
- US-A- 5 525 843
- US-A- 5 793 291

## Beschreibung

Die Erfindung bezieht sich auf eine Vorrichtung mit den Merkmalen des Oberbegriffs von Patentanspruch 1.

In diesem Zusammenhang ist aus der US 50 54 686 eine Vorrichtung bekannt, bei der bei stehendem Fahrzeug festgestellt wird, ob sich ein Lebewesen innerhalb des Fahrgastraums befindet. In diesem Fall wird eine Luftzufuhreinrichtung für diesen Raum aktiviert.

Für den Fall, dass ein Lebewesen sich im Kofferraum befindet, treten besondere Probleme auf, die in der US 50 54 686 weder angesprochen, noch gelöst sind. Der Kofferraum ist von außen in der Regel nicht einsehbar. Die Vorrichtung muss daher besonders zuverlässig sein. Zudem muss die Vorrichtung auch bei fahrendem Fahrzeug wirksam sein. Dabei tritt sofort das Problem auf, zwischen aktiven und passiven Bewegungen zu unterscheiden.

Unter einer passiven Bewegung ist eine solche zu verstehen, bei der sich ein Körper allein aufgrund seiner Massenträgheit relativ zum Fahrzeug bewegt. Bei einer Bewegung in einem abgeschlossenen Raum können zusätzlich auch Reaktionskräfte auftreten, wenn der Körper an die Begrenzung des Raumes stösst. Aktiv hingegen ist eine Bewegung, die vom Lebewesen selbst ausgeht. Typisches Beispiel hierfür ist eine Bewegung, die erfolgt lange nachdem das Fahrzeug zum Stillstand gekommen ist.

Der Erfindung liegt die Aufgabe zugrunde, eine Vorrichtung der eingangs genannten Art zu schaffen, mit der die Erstickungsgefahr eines im Kofferraum befindlichen Lebewesens vermieden ist.

Die Erfindung löst diese Aufgabe mit den Merkmalen des Patentanspruchs 1.

Da im Raum befindliche Ladung bedingt durch die Fahrdynamik sich bewegen kann, ist z. B. ein Sensor, der nur auf Bewegungen anspricht, in diesem Zusammenhang nicht geeignet.

Andrerseits ist mit Hilfe eines Sensors, der auf Bewegungen anspricht, eine schnelle Erkennung eines im abgeschlossenen Raum befindlichen Gegenstands erzielbar. Um zu unterscheiden, ob es sich um ein Lebewesen handelt, ist eine Auswerteschaltung vorgesehen, die eine aktive Bewegung von einer passiven Bewegung unterscheidet.

Der besondere Vorteil der Verwendung von Bewegungssensoren ist darin zu sehen, dass diese beispielsweise in Verbindung mit dem Innenraum- oder Diebstahlschutz gerade bei Fahrzeugen weit verbreitet sind und keine besondere Anpassung für die Verwendung im Rahmen der Erfindung notwendig ist.

Zum Erkennen der Bewegungsart (aktiv oder passiv) kann die Auswerteschaltung Beschleunigungssignale auswerten, die sich aufgrund der Bewegung des Fahrzeugs ergeben. Vorzugsweise dann, wenn aus dem Vergleich der Beschleunigungssignale und der Signale des Bewegungssensors eine vom Einfluss von Trägheitskräften freie Bewegung innerhalb des untersuchten Raums erkannt wird, ist dies typisch für die Existenz eines Lebewesens in dem Raum.

Zusätzlich oder alternativ können auch Informationen über Dauer und/oder Umfang der Bewegung des Fahrzeugs oder andere Informationen verwendet werden, aus denen sich Aussagen über die Fahrzeugdynamik ableiten lassen. Hier zu nennen sind die Geschwindigkeit oder der Lenkwinkel des Fahrzeugs sowie Angaben über den Verlauf und die Neigung der Fahrbahn.

Diese Informationen können zumindest teilweise mit Einrichtungen geliefert werden, die allein der Auswerteschaltung zugeordnet sind. Besonders vorteilhaft ist es demgegenüber, hierfür Sensoren zu verwenden, die zum Erkennen der Fahrzeugdynamik ohnehin vorgesehen sind und deren Signale zur Fahrzeugsstabilisierung oder Beschleunigungsregelung eingesetzt werden. Dadurch lässt sich der Gesamtaufwand reduzieren.

Die Luftzufuhreinrichtung kann auf verschiedene Weise arbeiten. Im Falle eines Kofferraums kann die Luftzufuhr allein dadurch vergrößert werden, dass der Kofferraumdeckel ein wenig angehoben wird und dadurch ein Luftein- und -austritt zum Kofferraum hin bzw. weg ermöglicht wird. Es ist auch möglich, den Kofferraumdeckel vollständig zu öffnen.

Dabei kann es sinnvoll oder sogar notwendig sein, auf den Betriebszustand des Fahrzeugs zu achten. Das Öffnen des Kofferraumdeckels bei voller Fahrt ist nicht sinnvoll. Bei einem stehenden Betrieb, z. B. vor einer Ampel kann es jedoch sinnvoll sein.

Anstelle der durch Öffnen des Kofferraumdeckels bewirkten Luftzufuhr kann auch ein separates Gebläse vorgesehen sein, das Luft in den Raum einführt. In diesem Fall kann es sinnvoll sein, die Qualität der zugeführten Luft zu überwachen, wie dies auch im Rahmen einer Frischluft-Umluft-Steuerung für die Heiz- und Klimaanlage des Fahrzeugs geschieht. Dort wird auch in Abhängigkeit von der Qualität der Aussenluft von Frischluft auf Umluft umgeschaltet. Im Rahmen der vorliegenden Erfindung kann die Luftzufuhr erst dann aufgenommen werden, wenn die zugeführte Luft eine hinreichende Qualität besitzt.

In Ergänzung kann verbunden mit der Aktivierung der Luftzufuhreinrichtung auch eine Warnblinkanlage eingeschaltet werden, um den nachfolgenden Verkehr auf eine besondere Notsituation des Fahrzeugs aufmerksam zu machen.

Schließlich kann dann, wenn der Sensor ein Lebewesen in dem Raum registriert, auch eine in der Regel ohnehin vorhandene Sirene eingeschaltet oder auch der Antriebsmotor über die Motorsteuereinrichtung dahingehend beeinflusst werden, dass der Betrieb des Fahrzeugs nicht oder nur noch eingeschränkt möglich ist.

## Patentansprüche

1. Vorrichtung zum Schutze eines Lebewesens in einem abschließbaren Raum eines Fahrzeugs, **dadurch gekennzeichnet, dass** zum Erkennen eines Lebewesens innerhalb eines Kofferraums ein Bewegungssensor angeordnet ist, der auf Bewegungen anspricht, dass dem Sensor eine Auswerteschaltung nachgeordnet ist, die eine aktive Bewegung von einer passiven Bewegung unterscheidet und dass eine Luftzufuhreinrichtung aktiviert ist, wenn sich ein Lebewesen im Kofferraum befindet.

2. Vorrichtung nach Anspruch 1, **dadurch gekennzeichnet, dass** die Auswerteschaltung zum Erkennen der Bewegung Beschleunigungssignale auswertet.

3. Vorrichtung nach Anspruch 2, **dadurch gekennzeichnet, dass** die Beschleunigungssignale von Einrichtungen zum Erkennen der Fahrzeugdynamik stammen.

4. Vorrichtung nach einem der Ansprüche 1 bis 3, **dadurch gekennzeichnet, dass** zur Erhöhung der Luftzufuhr eine Zugangstür für den Raum geöffnet ist.

5. Vorrichtung nach einem der Ansprüche 1 bis 4, **dadurch gekennzeichnet, dass** die Betriebsweise der Luftzufuhreinrichtung von Betriebsparametern des Fahrzeugs abhängig geschaltet ist.

## Claims

1. A device for protecting a living organism in a closable compartment of a vehicle, **characterised in that** in order to recognise a living organism in a luggage boot, a motion sensor is provided and responds to movements, the sensor is upstream of an evaluating circuit which distinguishes an active movement from a passive movement, and an air supply device is activated if a living organism is in the boot.

2. A device according to claim 1, **characterised in that** the evaluating circuit recognises motion by evaluating acceleration signals.

3. A device according to claim 2, **characterised in that** the acceleration signals originate from devices for recognising the movement of the vehicle.

4. A device according to any of claims 1 to 3, **characterised in that** an access door to the compartment is opened in order to increase the air supply.

5. A device according to any of claims 1 to 4, **characterised in that** the air supply device is operated in dependence on engine operating parameters.

## Revendications

1. Dispositif de protection d'un être vivant se trouvant dans un espace verrouillable d'un véhicule,
**caractérisé en ce que**
pour détecter la présence d'un être vivant à l'intérieur d'un coffre, il est prévu un capteur répondant aux mouvements, et auquel est associé en aval un dispositif d'évaluation qui distingue un mouvement actif d'un mouvement passif, un dispositif d'amenée d'air étant activé si un être vivant se trouve dans le coffre.

2. Dispositif selon la revendication 1,
**caractérisé en ce que**
le circuit d'évaluation exploite des signaux d'accélération pour reconnaître le mouvement.

3. Dispositif selon la revendication 2,
**caractérisé en ce que**
les signaux d'accélération sont fournis par le dispositif servant à reconnaître la dynamique du véhicule.

4. Dispositif selon une des revendications 1 à 3,
**caractérisé en ce que**
pour augmenter l'amenée d'air, une porte d'accès au coffre est ouverte.

5. Dispositif selon une des revendications 1 à 4,
**caractérisé en ce que**
le mode de fonctionnement du dispositif d'amenée d'air dépend des paramètres de fonctionnement du véhicule.
